# EUROPÄISCHE PATENTSCHRIFT

(11) **EP 0 891 612 B1**
(45) Veröffentlichungstag und Bekanntmachung des Hinweises auf die Patenterteilung: **20.11.2002**
(21) Anmeldenummer: 98902958.2
(22) Anmeldetag: 09.01.1998
(51) Int. Cl.: G09B 23/28

(54) **MODELL ZUM ÜBEN DER CARDIOPULMONAREN WIEDERBELEBUNG (CPR) EINES MENSCHEN**
MODEL FOR CARDIOPULMONARY RESUSCITATION (CPR) TRAINING IN A HUMAN
MODELE POUR LA PRATIQUE DE LA REANIMATION CARDIO-RESPIRATOIRE (CPR) CHEZ L'HOMME

(30) Priorität: 09.01.1997 DE 19700529
(43) Veröffentlichungstag der Anmeldung: 20.01.1999
(73) Patentinhaber: Asmund S. Laerdal Medical Gmbh & Co. Betriebs KG, 81249 München (DE)
(72) Erfinder: EGELANDSDAL, Einar, N-4033 Forus (NO); MCKINNEY, Larry, T., Katonah, NY 10536 (US)
(74) Vertreter: Lohrentz, Franz, Dipl.-Ing.
(86) Internationale Anmeldenummer: DE9800095
(87) Internationale Veröffentlichungsnummer: WO98030994

(56) Entgegenhaltungen:
- EP-A- 0 396 799
- WO-A-94/05000
- US-A- 5 330 514
- US-A- 5 423 685
- US-A- 5 628 633

## Beschreibung

Die Erfindung betrifft ein Modell zum Üben der cardiopulmonaren Wiederbelebung (CPR) eines Menschen mit den Merkmalen gemäß dem Oberbegriff der Patentansprüche 1 und 19.

Eine einwandfreie Beherrschung der CPR setzt eine ausreichende Übung voraus. Da die CPR, d. h. Herzmassage und künstliche Beatmung, an einem gesunden Menschen nicht geübt werden kann, sind seit langem Modelle, d.h. Nachbildungen zumindest des Oberkörpers und des Kopfes eines Menschen, bekannt, an denen die CPR erlernt und geübt wird. Die richtige Ausbildung der CPR prägt sich naturgemäß dem Lernenden bzw. Übenden umso deutlicher und bleibender ein, je mehr das Verhalten des Übungsmodells bezüglich der Herzmassage und der künstlichen Beatmung aber auch bezüglich der hierzu vorbereitenden Handlungen dem Verhalten des menschlichen Körpers angenähert ist. Die bekannten Modelle der eingangs angegebenen Art (vgl. Prospekt "Resusci Anne" der Firma Laerdal) weisen zu diesem Zweck zumindest eine Nachbildung des Brustkorbes, des Kopfes und der Lunge auf, wobei zur Simulation des Kompressionswiderstandes des Brustkorbs in der Brustkorbnachbildung eine Federeinrichtung angeordnet ist und die Lungennachbildung ein flacher Beutel ist, der mit einer Mundöffnung der Kopfnachbildung in Verbindung steht. Der Lungenbeutel ist im Brustkorb derart untergebracht, daß er beim Einblasen von Luft in den Beutel über die Mundöffnung ein sichtbares Anheben der Brustkorbvorderseite bewirkt. Außerdem ist bei dem bekannten Modell eine Vorkehrung dafür getroffen, daß das Einblasen von Luft bei der Mundbeatmung gegen einen Widerstand erfolgt, der dem Beatmungswiderstand der menschlichen Lunge entspricht, und daß weiterhin eine künstliche Beatmung nicht möglich ist, wenn die Kopfnachbildung eine Stellung einnimmt, die bei einem Menschen eine Blockierung der Luftwege und damit eine unwirksame künstliche Beatmung zur Folge hätte. Auch ist die Gesichtsnachbildung so wirklichkeitstreu gestaltet, daß der Lernende oder Übende bei der künstlichen Mundbeatmung gezwungen ist, die Nasenöffnungen der Gesichtsnachbildung durch Zuklemmen zu verschließen, wie dies auch bei der Beatmung z. B. eines Unfallopfers notwendig ist.

Die bekannten Modelle, welche diese Anforderungen erfüllen, sind verhältnismäßig aufwendig in der Herstellung und daher teuer. Deshalb war und ist es bisher üblich, die CPR unter Anleitung von fachkundigem Personal, z. B. Ärzten, an Instituten zu erlernen und zu üben, die ein solches Übungsmodell besitzen. Da die richtige Beherrschung der CPR aber eine ständige Übung voraussetzt, ist der Lernerfolg in vielen Fällen geringer als dies wünschenswert ist.

Um diesem Problem abzuhelfen, ist bereits ein Modell entwickelt worden, das einen sehr geringen Herstellungsaufwand erfordert und daher so billig ist, daß es auch von Einzelpersonen zum Zweck des Übens der CPR zu Hause erworben werden kann (US-A 49 84 987). Dieses Modell weist eine Nachbildung des Brustkorbes in Form einer Kunststoffplatte auf, die an den "Schultern" nach hinten abgebogen ist, so daß sie eine Vorder- und Rückwand bildet. Zwischen dieser Vorder- und Rückwand ist eine Federeinrichtung eingesetzt, so daß bei der Durchführung der Herzmassage die Vorderwand des Modells gegen elastischen Widerstand eingedrückt werden kann. In den "Schulterbereich" der Platte kann eine hohle Kopfnachbildung aus Kunststoff fest eingesteckt werden, die eine Mundöffnung und an ihrem unteren Ende einen Anschluß zur Befestigung eines aus Folie bestehenden Lungenbeutels besitzt.

Dieses bekannte Modell ist zwar aufgrund der geschilderten Konstruktion sehr billig in der Herstellung, so daß es auch im privaten Bereich zum Üben der CPR erworben werden kann, jedoch erfüllt es - allenfalls mit Ausnahme der Herzmassage - keine der eingangs geschilderten Anforderungen, die für das einwandfrei Erlernen der CPR unerläßlich sind. So läßt sich die künstliche Beatmung in der unveränderten Kopfhaltung des Modells ausführen, so daß der Lernende sich nicht einprägen kann, erst die richtige Kopfhaltung herzustellen, damit die künstliche Beatmung überhaupt Erfolg haben kann. Weiterhin hat der Übende auch keine realistische Kontrolle über das richtige Ausmaß der Beatmung, weil das Aufblasen des Lungenbeutels bei der Beatmung nicht zu einer sichtbaren Hebung der Brustkorbnachbildung führen kann.

Weiterhin ist auch bereits ein im Hinblick auf die gestellten Anforderungen verbessertes Modell zum Üben der CPR bekannt (DE 42 01 777A1), bei dem die Brustkorbnachbildung, um sie möglichst kostengünstig herstellen zu können, als ein räumliches Gebilde gestaltet ist, das aus einem flachen faltbaren Bahnmaterial, z. B. aus Wellpappe oder Karton, längs vorbestimmter Umrißlinien ausgeschnitten und dann zu dem räumlichen Gebilde längs vorbestimmter Faltlinien gefaltet ist. Es hat sich jedoch gezeigt, daß dieses bekannte Modell zwar von der Materialseite her sehr kostengünstig ist, jedoch einen nicht unbeträchtlichen Werkzeug- und Vorrichtungsaufwand zum Ausstanzen und Falten des räumlichen Gebildes erfordert. Insgesamt kann daher der Gestehungspreis dieses bekannten Modells nicht so niedrig gehalten werden, daß es in größerem Umfang im Privatbereich benutzt wird. Darüber hinaus hat sich gezeigt, daß das verwendete Material bezüglich der Tastempfindung nicht wie gewünscht an diejenige des menschlichen Oberkörpers angenähert werden kann.

Ein weiteres bekanntes Modell zum Üben der CPR (WO 94/05000) weist zur Herabsetzung der Gestehungskosten einen Torso aus Schaumstoff auf, der rückseitig eine Ausnehmung besitzt, die hinreichend groß ist, um ein wahlweise verwendbares Babymodell darin unterzubringen. Das Modell kann ohne das eingefügte Babymodell oder zusammen mit diesem benutzt werden, wodurch die Kompressionssteifigkeit der Brustkorbnachbildung veränderbar ist. Auch bei diesem bekannten Modell fehlt es an einem naturgetreuen Ansprechen auf die CPR, weil in dem Torso keine Lungennachbildung untergebracht ist. Vielmehr ist zum Üben der künstlichen Beatmung nur eine wahlweise durch Schwenken verschließoder freigebbare durchgehende Bohrung in der Kopfnachbildung vorgesehen; ein von dem Übenden empfundenes Anheben der Brust bei der Beatmung läßt sich nicht realisieren.

Ein naturnahes Anheben des Brustkorbs bei der künstlichen Beatmung ergibt sich zwar bei einem weiteren bekannten Modell (EPA-A 0 396 799), bei dem unter der Brustdecke zwei zueinander parallele, einen Führungsspalt zwischen sich bildende Platten vorgesehen sind. Zwischen diese wird jeweils eine von einer Mehrzahl bandförmig aufgewickelter Lungennachbildungen eingezogen, die bei der künstlichen Beatmung die obere der beiden Platten und damit die Brustdecke anheben kann. Um wirklichkeitsnah auch das Üben der gezielten Freigabe der Luftröhre vor der Beatmung zu ermöglichen, ist an der Kopfnachbildung eine Quetschrolle angeordnet, mit der eine am Halsansatz befindliche weitere Quetschrolle zusammenwirkt. Diese erfordern einen Herstellungs- und Montageaufwand, der das Modell insgesamt verteuert. Außerdem ist das Üben einer Herzmassage mit diesem Modell nicht möglich.

Schließlich ist ein Modell zum Üben der CPR bekannt, das einen Torso aus einem Schaumstoff umfaßt, der mit einer auswechselbaren Brustkorbnachbildung ausgestattet ist (US-A 38 72 609). Der Torso ist durch ein Skelett-Rahmenwerk aus Holz und Metall versteift und die auswechselbare Brustkorbnachbildung besteht aus einem Integralschaum, in den eine Nachbildung des Rippenkorbes und des Brustbeins aus einem harten jedoch biegeelastischem Kunststoffmaterial fest eingebettet ist. Unter dieser Brustkorbnachbildung ist eine Luftröhren/Lungen-Nachbildung in Form eines aufblasbaren Beutels angeordnet.

Diese Brustkorbnachbildung liefert bei dem bekannten Modell aufgrund der Elastizität des Rippenkorbs und des Schaumstoffs ein dem menschlichen Oberkörper ähnliches Verformungsverhalten. Ein Heben der Brust bei der künstlichen Beatmung läßt sich jedoch nicht simulieren, da die Brustkorbnachbildung als eine kompakte Einheit über dem aufblasbaren Beutel in eine Ausnehmung des Torsos eingesetzt ist. Vor allem aber ist die Gestaltung dieses bekannten Übungsmodells außerordentlich aufwendig und teuer, so daß es wiederum nur zur Gruppenausbildung in Instituten oder dgl. erworben werden kann, Erwerb und Benutzung im Privatbereich sich jedoch wegen des notwendig hohen Preises verbieten.

Aufgabe der Erfindung ist es daher, ein Modell zum Üben der CPR zu schaffen, dessen Aussehen und Verhalten bezüglich der Herzmassage und der Beatmung denjenigen des menschlichen Oberkörpers besser angepaßt ist, und das vor allem einen so geringen Herstellungsaufwand und folglich niedrigen Preis hat, daß es auch von Privatpersonen zum Üben der CPR zu Hause erworben werden kann.

Erfindungsgemäß wird diese Aufgabe gelöst durch die Ausgestaltung nach der Patentansprüche 1 und 19.

Die Erfindung beruht auf der Erkenntnis, daß es durch die Kombination eines im Ganzen aus Schaumstoff bestehenden Torsos und einer in dem Torso aufgenommenen biegeelastischen Platte möglich ist, das Verformungsverhalten eines menschlichen Körpers weitgehend zu simulieren, ohne daß es einer wirklichkeitsgetreuen Nachbildung eines Rippenkäfigs bedarf. Da nämlich erfindungsgemäß die Brustkorbnachbildung als Ganzes durch den Torso gebildet wird, nicht nur einen Teil davon bildet wie bei dem vorstehend beschriebenen bekannten Modell, führt die elastische Druckverformbarkeit des als Abstützung auf der Unterlage ausgebildeten Torsorückens in Verbindung mit der im Torso aufgenommenen Brustplatte zu einer Gesamtverformung, die sich durch entsprechende Abstimmung des Schaumstoffkörpers dem Verhalten des menschlichen Oberkörpers nähert. Da außerdem die Brustplatte an der Brustseite nicht zutage tritt, sondern in einen bestimmten Abstand darunter in dem Schaumstoffkörper des Torsos aufgenommen ist, können die äußere Gestaltung und das Anfühlen des Torsos weitgehend an diejenigen des menschlichen Oberkörpers angeglichen werden.

Das Kompressionsverhalten des Torsos läßt sich besonders einfach dann dem Verhalten des menschlichen Oberkörpers annahern, wenn in dem "Rücken" des Torsos eine Ausnehmung vorgesehen ist, die sich in ihrer Tiefe vorzugsweise bis zu der Brustplatte hin erstreckt. Denn in diesem Fall überbrückt die Brustplatte die Ausnehmung in der Querrichtung, gegebenenfalls auch in deren Längserstreckung, und stützt sich dabei an ihren in Querrichtung gegenüberliegenden Randabschnitten ab. Eine Kompression bei der Herzmassage-Übung führt daher zu einer Biegeverformung der Brustplatte in deren mittlerem Bereich und zugleich zu einer Druckverformung der in Querrichtung einander gegenüberliegenden Randbereiche der rückseitigen Ausnehmung, die in diesem Fall die Abstützkörper des Torsos auf der Unterlage bilden. Damit ist die Eindrückung des Torsos an der Brustseite trotz der im Vergleich zu einem Rippenkorb einfachen Gestaltung der Platte sehr an das Verformungsverhalten des Rippenkorbs angepaßt.

Der Schaumstoffkörper des Torsos, der zweckmäßigerweise als Integralschaumkörper gestaltet ist, kann in einem einfachen Gießverfahren als Einheit hergestellt werden; ebenso einfach und daher kostengünstig gestaltet sich die Herstellung der Brustplatte, die aus Kunststoff bestehen kann.

Die Anordnung der Brustplatte hinter der Brustseite des Torsos ergibt weiterhin eine naturgetreue Anordnung der Luftröhren/Lungen-Nachbildung in Form eines Beutels, da diese zwischen der Brustwand des Torsos und der Platte eingebracht werden kann. Hierzu muß die Vorderseite der Platte entsprechend zugänglich sein. Dies kann dadurch erreicht werden, daß die Brustseite des Torsos über der Brustplatte nach Art eines Deckels aufgeklappt werden kann. Erfindungsgemäß ist jedoch bei der beschriebenen Ausführungsform mit einer rückwärtigen Ausnehmung diese vorzugsweise so auszugebildet, daß die Brustplatte von hinten her zusammen mit der daran befestigten Luftröhren/Lungen-Nachbildung in die Ausnehmung eingefügt werden kann. Die Ausnehmung ist dafür so gestaltet, daß sie mit ihren Randbereichen die seitlichen Randabschnitte der Brustplatte übergreift, damit die vorstehend geschilderte Abstützung erzielt wird.

Da bei dieser Anordnung die Luftröhren/Lungen-Nachbildung sich vor der Platte und nur wenig hinter der Brustseite des Torsos befindet, kann sie sich auf der Brustplatte bei der künstlichen Beatmung abstützen und die Brustseite des Torsos naturgetreu aufwölben. Hierzu sind keine gesonderten Maßnahmen in technischer Hinsicht erforderlich.

Nach einer vorteilhaften weiteren Ausgestaltung ist vorgesehen, daß die Kopfnachbildung des Modells ebenfalls aus Schaumstoff besteht und einstückig mit dem Torso ausgebildet ist. Die auf der Rückseite des Torsos vorhandene Ausnehmung erstreckt sich in diesem Fall auch in den Nackenbereich der Kopfnachbildung soweit, daß sie mit der Mundöffnung der Kopfnachbildung in Verbindung steht, und die Brustplatte ist mit einem halsartigen Fortsatz ausgestattet, der sich längs der Ausnehmung auch in die Kopfnachbildung hinein erstreckt und im Bereich der Mundöffnung zu dieser hin abgewinkelt ist. Dementsprechend kann der die Luftröhrennachbildung darstellende schlauchförmige Ansatz des Beutels, der die Luftröhren/Lungen-Nachbildung darstellt, sich längs dem halsartigen Fortsatz bis zur Mundöffnung hin erstrecken und dort an dem Fortsatz festgelegt sein. Hierzu weist zweckmäßigerweise das freie Ende des Fortsatzes eine Befestigungsmöglichkeit auf. Die vorstehend beschriebene Gestaltung der Brustplatte erlaubt es, den daran befindlichen Fortsatz so in Anlage an den davor befindlichen Brust- bzw. Halsbereich des Torsos zu führen, daß die dazwischen befindliche Luftröhrennachbildung bei Normalstellung des Kopfes eingeklemmt und dadurch blockiert ist. Durch das für eine Beatmung notwendige Zurückschwenken des Kopfes wird jedoch der Fortsatz ebenfalls nach hinten gebogen und kommt dadurch aus der Anlage an dem davor befindlichen Brust- bzw. Halsbereich des Torsos frei. Außerdem wird das elastische Schaumstoffmaterial in diesem Bereich durch das Rückschwenken des Kopfes elastisch gedehnt und dadurch von dem Fortsatz abgehoben. Somit kann auf eine sehr einfache Weise an dem erfindungsgemäßen Modell ein realistisches Verhalten bezüglich der Beatmungstechnik erzielt werden, wofür gesonderter Schutz beansprucht ist.

Weitere Vorteile und Merkmale der Erfindung ergeben sich aus der nachfolgenden Beschreibung von Ausführungsbeispiels anhand der beiliegenden Zeichnungen sowie aus weiteren Unteransprüchen. In den Zeichnungen zeigen:
Fig. 1 eine Schrägansicht von vorne eines erfindungsgemäßen Modells;
Fig. 2 eine Schrägansicht von hinten des Modells gemäß Fig. 1, aus der eine rückseitige Ausnehmung deutlich ist;
Fig. 3 eine der Fig. 2 entsprechende Schrägansicht mit in die Ausnehmung eingefügter biegeelastischer Brustplatte;
Fig. 4 einen Längsschnitt durch das Modell mit eingefügter Brustplatte und darin aufgenommener Luftröhren/Lungen-Nachbildung;
Fig. 5 eine der Fig. 4 entsprechende Darstellung mit der Zuordnung einer Gesichtsmaske im Stadium des Aufsetzens;
Fig. 6 eine den Fig. 4 und 5 entsprechende Darstellung mit an der Kopfnachbildung befestigter Gesichtsmaske;
Fig. 7 eine der Fig. 6 entsprechende Darstellung mit einer zum Zweck der Beatmung nach hinten gekippten Kopfnachbildung;
Fig. 8 eine schaubildliche Darstellung der Brustplatte mit daran befestigter Luftröhren/Lungen-Nachbildung;
Fig.9 eine Detaildarstellung eines mechanischen Lautgebers;
Fig. 10 a, 10 b, Vorderansicht und Seitenansicht des in Fig. 9 gezeigten mechanischen Lautgebers;
Fig. 11 einen Schnitt längs der Linie XI-XI in Fig. 6;
Fig. 12 eine zu Fig. 8 analoge schaubildliche Darstellung der Brustplatte einer modifizierten Ausführungsform eines erfindungsgemäßen Modells in einer die Luftröhre der Luftröhren/Lungen-Nachbildung verschließenden Stellung;
Fig. 13 die Brustplatte gemäß Fig. 12 in einer die Luftröhre freigebenden Stellung;
Fig. 14 einen zu Fig. 6 analogen Längsschnitt durch die modifizierte Ausführungsform des erfindungsgemäßen Modells mit eingefügter Brustplatte und darin aufgenommener Luftröhren/Lungen-Nachbildung in der die Luftröhre verschließenden Stellung der Brustplatte;
Fig. 15 eine der Fig. 14 entsprechende Darstellung mit zum Zweck der Beatmung nach hinten gekippter Kopfnachbildung und einer die Luftröhre freigebenden Stellung der Brustplatte, und
Fig. 16, 17 jeweils eine Einzelheit der Fig. 14, 15 in größerem Maßstab.

Soweit in der nachfolgenden Beschreibung die Richtungsangaben "vorne" bzw. "hinten" verwendet werden, sind diese in Bezug auf die aufrechte Haltung des menschlichen Oberkörpers zu verstehen.

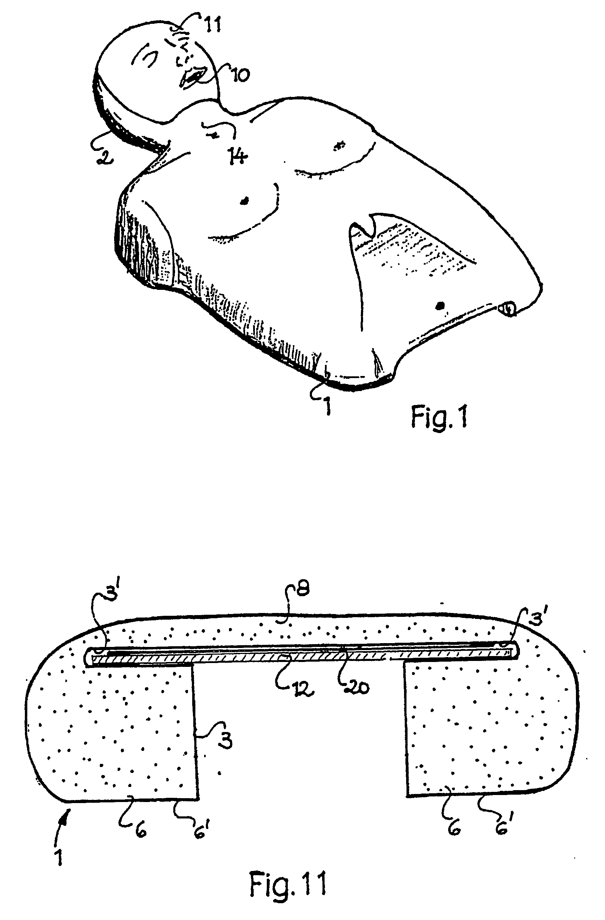

Wie aus den Fig. 1 bis 3 hervorgeht, umfaßt das erfindungsgemäße Modell zum Üben der CPR eine Brustkorbnachbildung in Gestalt eines Torsos 1 und eine mit dem Torso materialeinheitliche Kopfnachbildung 2. Die vordere Brustseite des Torsos 1 zeigt eine Gestaltung, die weitgehend derjenigen eines menschlichen Oberkörpers entspricht. Der Torso 1 und die damit verbundene Kopfnachbildung 2 bilden insgesamt einen Integralschaumkörper aus einem Schaumstoff, der hinreichend elastisch ist, um die bei einer Herzmassage auftretende Druckverformung nach Wegnahme der entsprechenden Belastung wieder rückgängig zu machen.

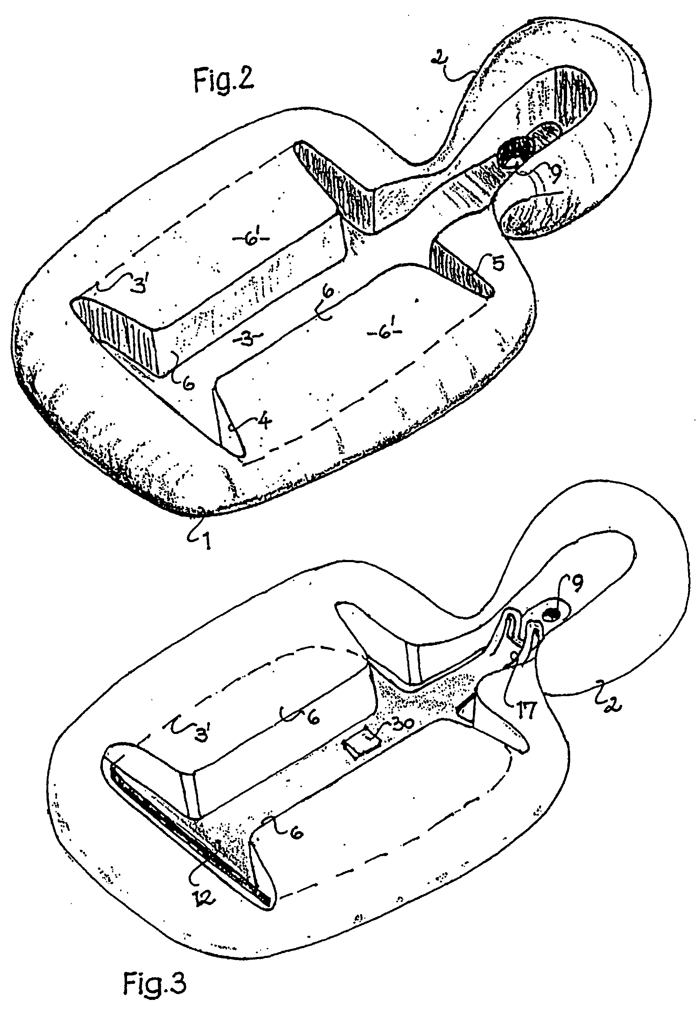

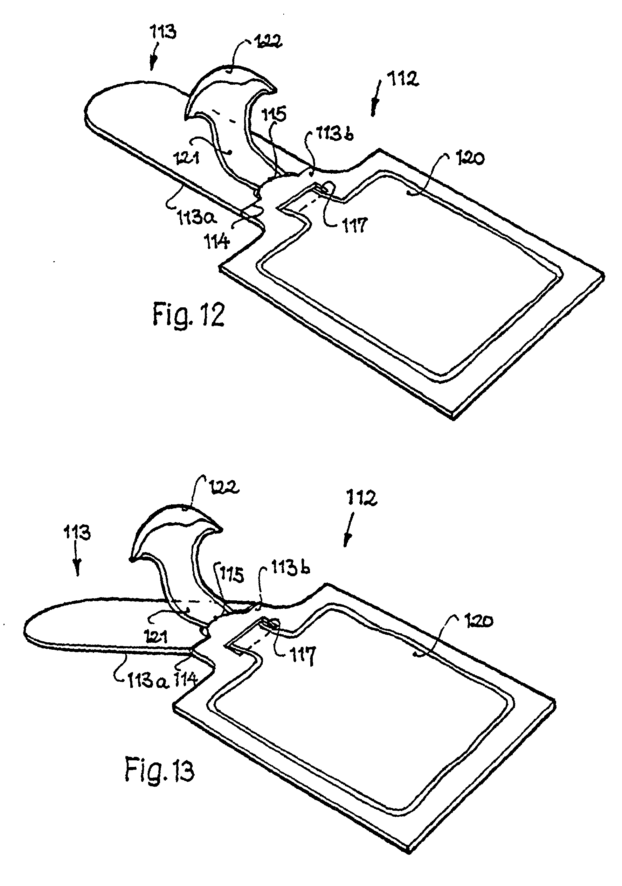

Gemäß den Fig. 2 und 3 weisen der Torso 1 und die Kopfnachbildung 2 auf der Rückseite eine langgestreckte kanalartige Ausnehmung 3 auf, die sich etwa entlang einer gedachten Wirbelsäule des Torsos 1 und in den Hinterkopfbereich der Kopfnachbildung 2 hinein erstreckt. Am unteren Ende und im Schulterbereich ist die Ausnehmung 3 örtlich durch Querkanäle 4 bzw. 5 erweitert; außerdem setzt sich die Ausnehmung 3 bis zum Ende der Querkanäle 4 bzw. 5 in ihrem zwischen den Querkanälen 4, 5 liegenden Abschnitt als schlitzförmige Ausnehmung 3' fort (Fig. 11). Dadurch ist der Rücken des Torsos 1 zu Abstützkörpern 6 gestaltet, welche die Ausnehmung 3 auf deren zwischen den Querkanälen 4, 5 liegendem Abschnitt begrenzen. Die Abstützkörper 6 bilden mit ihrer Rückseite Abstützflächen 6', mit denen das Modell bei der bestimmungsgemäßen Benutzung auf einer nicht gezeigten Unterlage aufliegt und sich darauf abstützt. Die Tiefe der Ausnehmung 3 ist in dem zwischen den Querkanälen 4, 5 liegenden Abschnitt so bemessen, daß die vordere Brustseite 8 des Torsos 1 eine Wanddicke von nur etwa 1/6 bis 1/8 der Gesamttiefe des Torsos 1 aufweist.

Über dem oberen Querkanal 5 erstreckt sich die Ausnehmung 3 durch den Nackenbereich der Kopfnachbildung 2 in deren Hinterkopf soweit, daß auf dem Grund der Ausnehmung 3 dort eine Verbindung mit einer Mundöffnung 9 besteht. Die Mundöffnung 9 korrespondiert mit der Mundnachbildung 10 einer auf die Kopfnachbildung 2 aufsetzbaren Gesichtsmaske 11.

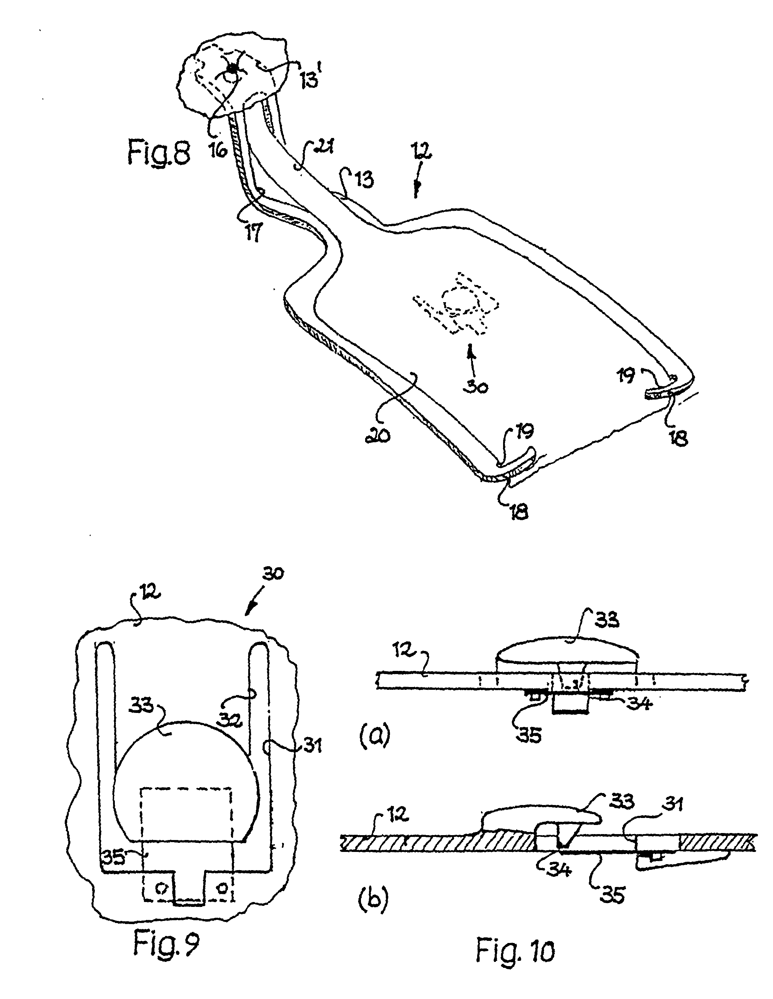

Der Integralschaum, aus dem der Torso 1 besteht, ist in seinem unteren Abschnitt längs dem Querkanal 4 soweit nach vorne abbiegbar, daß dadurch der Schlitzteil 3' der Ausnehmung 3 zugänglich wird, um eine Brustplatte 12 (Fig. 8) unter die Abstützkörper 6 in den Schlitzteil 3' der Ausnehmung 3 einschieben zu können. Hierzu können auch die block- oder quaderförmigen Abstützkörper 6 aufgrund der elastischen Nachgiebigkeit des Schaumstoffes angehoben werden. Fig. 3 zeigt die bestimmungsgemäße Lage der Brustplatte 12 in dem Torso 1 und deren Erstreckung zwischen den Querkanälen 4 und 5.

Die Brustplatte 12 hat eine der Ausnehmung 3 einschließlich deren Schlitzteil 3' entsprechende, im wesentlichen rechteckige Gestalt und weist einen halsartigen Fortsatz 13 auf, der sich in den Nackenbereich der Kopfnachbildung 2 hinein bis in Höhe der Mundöffnung 9 erstreckt. Die Brustplatte 12 ist in ihrer Längsrichtung entsprechend der Brustwölbung eines menschlichen Oberkörpers gewölbt und der halsartige Fortsatz 13 krümmt sich im Halsbereich 14 der Kopfnachbildung 2 nach hinten und ist etwa in Höhe der Mundöffnung 9 scharf nach vorne zur Mundöffnung 9 hin abgekrümmt oder abgewinkelt. An seinem freien Ende bildet der halsförmige Fortsatz 13 eine etwa parallel zu der Brustplatte 12 gerichtete Befestigungsplatte 13', die eine der Mundöffnung 9 entsprechende und durch einen vorstehenden Rand 15 umgrenzte Halteöffnung 16 aufweist. In dem Abschnitt zwischen der Krümmung nach hinten und der Befestigungsplatte 13' enthält der Fortsatz 13 ein sich längs erstreckendes Langloch 17.

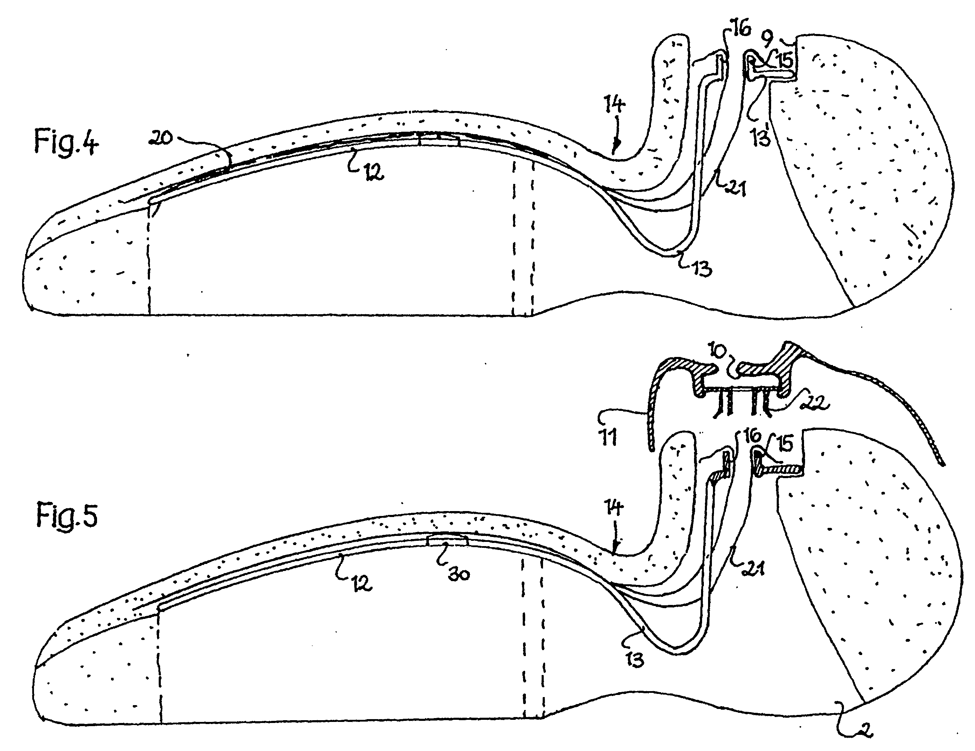

Die Brustplatte 12 weist an ihrem unteren Rand zwei gegeneinander gerichtete Haltehaken 18 auf, die mit dem Plattenrand einander gegenüberliegende Halteschlitze 19 begrenzen. Die Haltehaken 18 bzw. die dadurch begrenzten Halteschlitze 19 dienen zur Fixierung einer Luftröhren/Lungen-Nachbildung 20 in Form eines aus Kunststoff-Folie bestehenden Beutels, der sich an seinem oberen Ende in einer schlauchförmigen Luftröhrennachbildung 21 fortsetzt (Fig. 8). Im Benutzungszustand liegt der Beutel 20 auf der Vorderseite der Brustplatte 12 auf und damit hinter der Brustseite 8 des Torsos 1. Die Luftröhrennachbildung 21 erstreckt sich längs dem Fortsatz 13 der Brustplatte 12 und durch dessen Langloch 17 hindurch bis zu der Halteöffnung 16, durch die sie von hinten her hindurch geführt und um den Halterand 15 mit ihrem freien Ende umgestülpt ist (Fig. 4, 5).

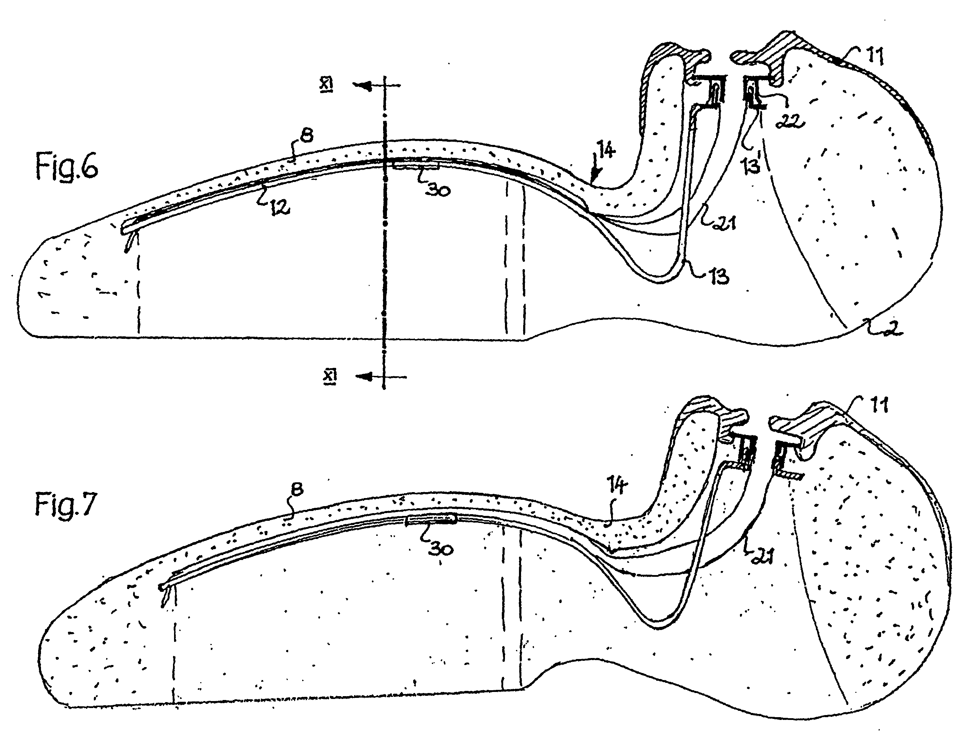

Die Gesichtsmaske 11 enthält zum Zweck ihrer Befestigung ein in der Mundöffnung 10 angeordnetes oder mit der Gesichtsmaske 11 einstückig ausgebildetes Steckbefestigungselement 22, das auf den vorstehenden Halterand 15 an der Befestigungsplatte 13' aufgesteckt werden kann (Fig. 5, 6). Das Steckbefestigungselement 22 umgreift den Halterand 15 und das darübergestülpte freie Ende der Luftröhrennachbildung 21 unter elastischer Verformung und fixiert damit sowohl die Gesichtsmaske 11 auf der Kopfnachbildung 2 als auch die Luftröhrennachbildung 21 an der Befestigungsplatte 13'. Die Ausbildung der wirklichkeitsgetreuen Gesichtsmaske 11 aus elastomerem Material, deren Befestigung an einer Kopfnachbildung und deren Steckverbindung mit einer Luftröhrennachbildung über ein Steckverbindungselement sind im Stand der Technik bekannt und bedürfen hier keiner näheren Erläuterung (vgl. Laerdal-Prospekt "Resusci Anne" 15030EN).

Nach dem Aufstecken der Gesichtsmaske 11 befindet sich das Modell in dem für das Üben der CPR bestimmten Zustand. In diesem Zustand liegt der Halsbereich 14 der Kopfnachbildung 11 so an dem Fortsatz 13 der Brustplatte 12 an, daß dadurch die dazwischen befindliche Luftröhrennachbildung 21 eingeklemmt und folglich ein Luftdurchgang blockiert ist. Hierzu ist die Rückwartskrümmung des Fortsatzes 13 in Bezug auf die Ausnehmung 3'und insbesondere deren Schlitzteil 13 entsprechend bemessen. Gegebenenfalls kann der Halsbereich 14 an seiner dem Fortsatz 13 zugewendeten Innenseite mit einer örtlichen Klemmerhebung versehen sein (Fig. 4 bis 6). Die Durchgängigkeit der Luftröhrennachbildung 21 läßt sich herstellen, wenn die Kopfnachbildung 2 aus dem unbelasteten Zustand gemäß den Fig. 4 bis 6 durch Druck auf das Kinn nach hinten bewegt wird, wie das in Fig. 7 dargestellt ist.

Durch die Kippbewegung wird einerseits der Halsbereich 14 unter Zugspannung gesetzt, aus der eine Dehnung und Abhebetendenz des Halsbereiches 14 von dem Fortsatz 13 resultiert. Andererseits wird der Fortsatz 13 selbst durch das entstehende Biegemoment nach hinten stärker gekrümmt. Im Ergebnis wird der zuvor bestehende Klemmzustand der Luftröhrennachbildung 21 aufgehoben.

Die Brustplatte 12 enthält einen mechanischen Lautgeber 30, der in den Fig. 9 und 10 näher dargestellt ist. Hierzu weist die Brustplatte 12 in einem Bereich, der dem unteren Endabschnitt des Brustbeins im menschlichen Oberkörper entspricht, einen U-förmigen Durchbruch 31 auf, der eine Zunge 32 umgrenzt. Die Zunge 32 trägt an ihrem freien Ende eine nach vorn vorspringende Druckplatte 33, die einen nach hinten weisenden Zahn 34 besitzt. An der Hinterseite der Brustplatte 12 ist ein Metallblatt 35 so befestigt, daß es, wie aus Fig. 10b ersichtlich ist, in den Durchbruch 31 hinein bis unter den Zahn 34 ragt. Das Metallblatt 35 enthält eine nicht gezeigte Einprägung, die dazu führt, daß das Metallblatt 35 bei einer Biegung nach hinten ein knackendes Geräusch liefert. Lautgeber dieser Art sind bekannt und bedürfen deshalb hier keiner näheren Beschreibung.

Die Brustplatte 12 und der damit einstückige halsartige Fortsatz 13 bestehen in dem beschriebenen Ausführungsbeispiel aus einem harten biegeelastischen Kunststoffmaterial und weisen durchgehend eine im wesentlichen gleichbleibende Dicke auf. Es kann jedoch daran gedacht werden, die Dicke in dem Bereich, in welchem der mechanische Lautgeber 30 ausgebildet ist, örtlich zu erhöhen, um dadurch eine erhöhte Biegesteifigkeit der Zunge 32 zu erzielen.

Die Wirkungsweise des vorstehend beschriebenen Modells ist folgende:
Ausgehend von dem in Fig. 6 gezeigten Zustand plaziert der Übende zunächst in bekannter Weise seine Hände im Bereich des unteren Brustbeinabschnitts, um eine Herzmassage auszuführen. Die richtige Position der Hände kann der Übende feststellen, da die Druckplatte 33 durch die Brustseite 8 des Torsos 1 hindurch fühlbar ist. Danach werden die für die Herzmassage nötigen Kompressionen der Brustkorbnachbildung ausgeführt. Diesen Kompressionen setzt der Torso 1 aufgrund der Druckverformbarkeit der Abstützkörper 6 einen elastischen Widerstand in einem Ausmaß entgegen, das der Druckverformbarkeit des menschlichen Brustkorbes aufgrund der Biegeelastizität der Rippen in deren seitlichem Krümmungsabschnitt entspricht. Der daraus resultierenden Eindrückbewegung der Brustseite 8 des Torsos 1 überlagert sich bei diesem Ausführungsbeispiel eine weitere Eindrückbewegung, die aufgrund der Biegeelastizität der Brustplatte 12 eintritt. Die Brustplatte 12, welche die Ausnehmung 3 überbrückt (vgl. Fig. 11), stützt sich mit ihren seitlichen Abschnitten dabei an den Abstützkörpern 6 ab. Die auftretende Gesamt-Druckverformung des Torsos 1 entspricht damit der Art nach derjenigen eines menschlichen Brustkorbes. Das dabei auftretende Ausmaß der Druckverformung in Bezug auf die ausgeübte Belastung ist bestimmt durch die elastische Widerstandskraft des Schaumstoffes, aus dem die Abstützkörper 6 bestehen, sowie durch die Widerstandskraft, welche die Brustplatte 12 ihrer Biegebelastung entgegensetzt.

Im Zuge der Kompressionsbelastung erfährt auch die Zunge 32 der Brustplatte 12 eine Verformung nach hinten, durch welche der Zahn 34 an der Druckplatte 33 dem Metallblatt 35 angenähert wird und schließlich darauf auftrifft. Der Abstand des Zahns 34 von dem Metallblatt 35 im Ruhezustand ist so bemessen, daß erst bei Erreichen der korrekten Kompressionstiefe des Torsos 1 auch die Zunge 32 soweit nach hinten gebogen ist, daß das Metallblatt 35 hinreichend ausgelenkt ist, um einen Knacklaut abzugeben. Der Übende kann daher die Intensität seiner Kompressionen und damit deren Korrektheit akustisch überwachen und steuern.

Die Ausführung der CPR setzt abwechselnd Herzmassage und künstliche Beatmung voraus. Nach einer bestimmten Anzahl von Kompressionen wird der Übende daher über die Mundöffnung 10 der Gesichtsmaske 11 Beatmungsstöße ausführen. Die korrekte Beatmung bei einem Menschen setzt hierzu eine nach hinten geneigte Kopfhaltung voraus, um eine Knickung der Luftröhre zu beseitigen, die den Luftdurchgang behindert oder verhindert. Entsprechend muß bei dem erfindungsgemäßen Modell die Kopfnachbildung 2 durch Druck auf das Kinn nach hinten geschwenkt und in dieser Stellung gehalten werden, um den Klemmzustand der Luftröhrennachbildung 21, der den Luftdurchtritt verhindert, aufzuheben (Fig. 7). Die elastische Dehnbarkeit des Schaumstoffs im Halsbereich 14, die dort durch die Wanddicke bestimmt ist, und die Biegeverformbarkeit des Fortsatzes 13 an der Brustplatte 12 sind so abgestimmt, daß einerseits der Rückwärtsbewegung der Kopfnachbildung 2 ein auch bei einem Menschen zu erwartender Widerstand entgegengesetzt wird, andererseits in entsprechendem Ausmaß durchgeführt werden kann. Die über dem Beutel 20 befindliche Brustseite 8 wird unter deren elastischer Verformung, die einen entsprechenden Einblaswiderstand erzeugt, naturgetreu aufgewölbt.

Die Fig. 12 bis 17 zeigen eine gegenüber dem vorstehend beschriebenen Ausführungsbeispiel modifizierte Ausführungsform eines erfindungsgemäßen Modells, bei dem der Torso 101 weitgehend identisch mit dem Torso 1 gemäß den Fig. 1 bis 11 ausgebildet ist. Die Modifikation betrifft die Gestaltung der Brustplatte 112 und deren Zusammenwirken mit der Luftröhren/Lungen-Nachbildung 120.

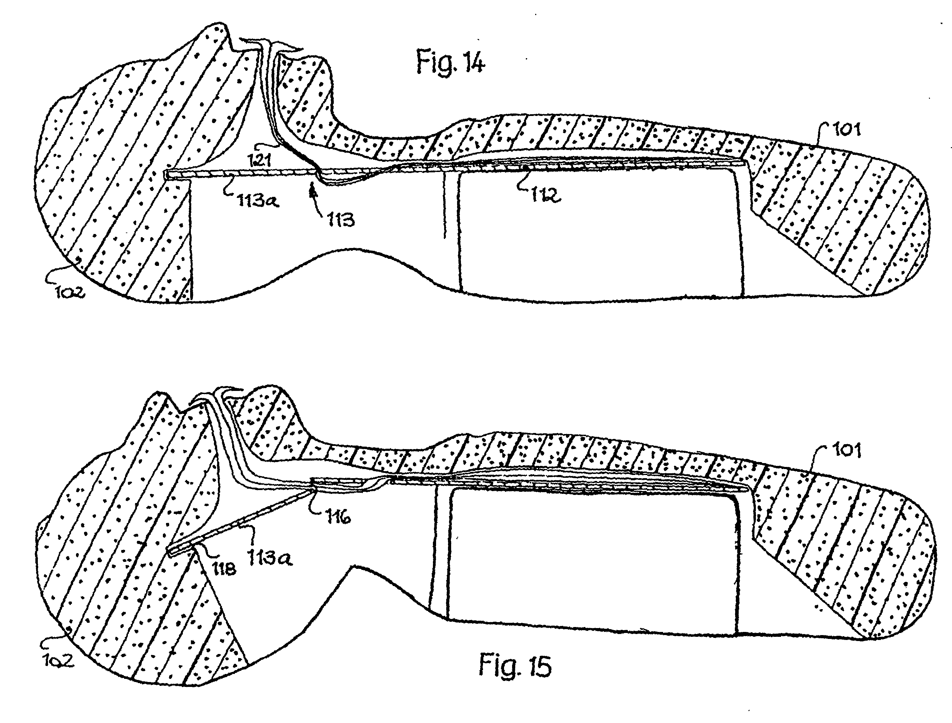

Gemäß der Darstellung in den Fig. 12, 13 besteht die Brustplatte 112 im wesentlichen aus einer weitgehend ebenen und im wesentlichen rechteckigen Platte aus einem biegeelastischem Kunststoff. Die Dicke der Brustplatte 112 ist auch hier so gewählt, daß ihre Verformung bei der Ausübung des CPR der Verformung eines menschlichen Brustkorbes entspricht. Am oberen Rand weist die Brustplatte 112 einen halsartigen Fortsatz 113 auf, der in einen Schwenkteil 113a und einen einstückig mit der Brustplatte 112 ausgebildeten Teil 113b unterteilt ist. Der Schwenkteil 113a ist von dem feststehenden Teil 113b durch eine Schlitzlinie 114 getrennt, die durch zwei von den einander gegenüberliegenden Seitenrändern des halsartigen Fortsatzes 113 her geradlinig verläuft und über einen mittleren Abschnitt der Breite des halsartigen Fortsatzes 113 einen halbkreisförmigen Bogen 115 beschreibt. Im Bereich des Halbkreisbogens 115 der Schlitzlinie durchsetzt diese die Dicke der den halsartigen Fortsatz 113 bildenden Kunststoffplatte vollständig, so daß der Schwenkteil 113a längs diesem Teil der Schlitzlinie vollständig von dem feststehenden Teil 113b getrennt ist. Im Bereich der geradlinigen Abschnitte ist die Schlitzlinie jedoch durch ein Filmscharnier überbrückt. Das Filmscharnier ist in dem gezeigten Ausführungsbeispiel dadurch gebildet, daß die Schlitzlinie die Dicke der Kunststoffplatte nicht vollständig durchsetzt, sondern nur bis zu einer vorbestimmten Tiefe unter Beibehaltung einer Restdicke des Kunststoffmaterials in dieses eindringt. Jedes Filmscharnier im Bereich der geraden Abschnitte der Schlitzlinie 114 bildet somit einen integralen Teil des Schwenkteils 113a und des feststehenden Teils 113b.

Der feststehende Teil 113b des halsartigen Fortsatzes 113 weist etwa in Höhe des oberen Randes der Brustplatte 112 einen schmal rechteckigen, querverlaufenden Durchbruch 117 auf, dessen Breite zumindest angenähert der Breite des halbkreisförmigen Abschnitts 115 der Schlitzlinie 114 entspricht. Durch den Durchbruch 117 verläuft die Luftröhren-Nachbildung 121 hindurch, so daß sie unterhalb des anschließenden Teils des feststehenden Teils 113b liegt und durchsetzt von unten her den halbkreisförmigen Abschnitt 115 der Schlitzlinie 114. An ihrem oberen Ende 122 ist die Luftröhren-Nachbildung 121 trichterförmig erweitert.

Zumindest in dem halbkreisförmigen Abschnitt 115, zweckmäßigerweise jedoch auch in den geraden Filmscharnier-Abschnitten, ist die Breite der Schlitzlinie 114 so festgelegt, daß die Luftröhren-Nachbildung 121 zusammengepreßt wird, wenn der Schwenkteil 113a mit dem feststehenden Teil 113b und damit mit der Brustplatte 112 insgesamt weitgehend in einer Ebene liegt (Fig. 12). In dieser Stellung des Schwenkteils 113a ist folglich die Luftröhren-Nachbildung 121 verschlossen, das heißt Luft kann in die Lungen-Nachbildung 120 nicht eingeblasen werden.

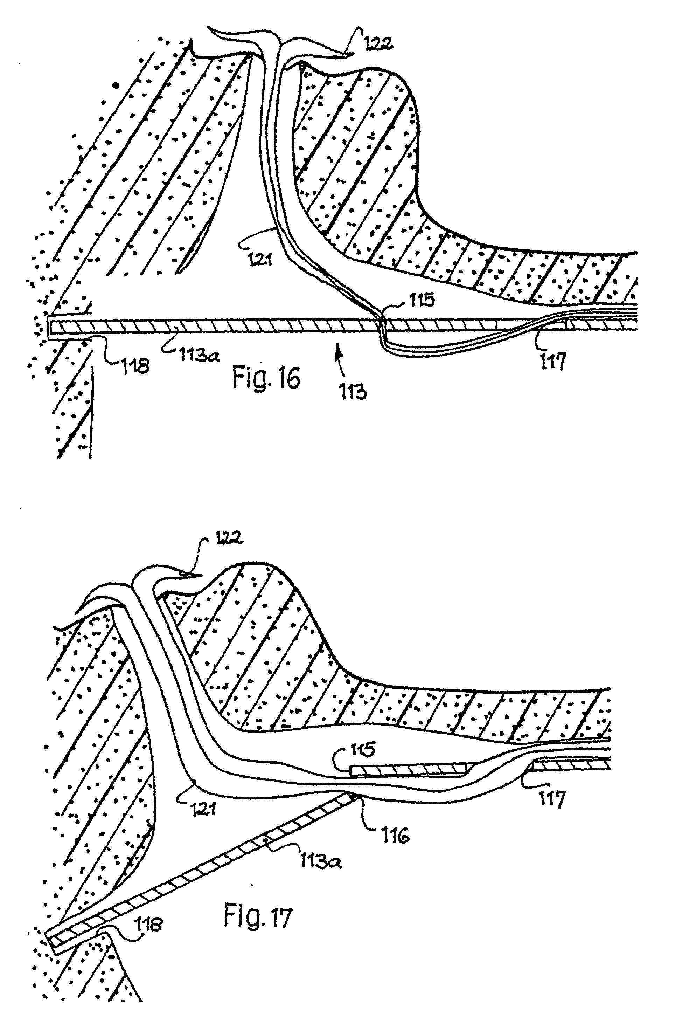

Ist der Schwenkteil 113a mittels der beiden Filmscharniere nach unten geschwenkt (Fig. 13), so entfernt sich der einspringende Schlitzlinienrand des Schwenkteils 113a in dem halbkreisförmigen Abschnitt 115 von dem gegenüberliegenden vorspringenden Schlitzlinienrand des feststehenden Teils 113b und gibt dadurch eine Öffnung 116 frei (Fig. 15, 17). Die Öffnung 116 entsteht aufgrund der hinter bzw. unter dem halbkreisförmigen Abschnitt 115 liegenden Schwenkachse, die durch die miteinander fluchtenden Filmscharniere der Schlitzlinie 114 gebildet ist. In der geschwenkten Stellung des Schwenkteils 113a ist der Durchgang der Luftröhren-Nachbildung 121 freigegeben; Luft kann daher in die Lungen-Nachbildung 120 eingeblasen werden.

Wie aus den Fig. 14 und 16 hervorgeht, nimmt der halsartige Fortsatz 113 der Brustplatte 112 mit dem Schwenkteil 113a eine gestreckte Stellung ein, wenn die Kopf-Nachbildung 102 des Torsos 101 die Normalstellung bezüglich des Brustkorbes einnimmt. In diesem Zustand ist die Luftröhren-Nachbildung 121 in dem halbkreisförmigen Abschnitt 115 der Schlitzlinie 114 eingeklemmt, so daß eine Beatmung durch Einblasen von Luft in die Lungen-Nachbildung 112 nicht möglich ist. Wird jedoch gemäß den Fig. 15, 17 die Kopf-Nachbildung 102 entsprechend der ordnungsgemäßen Ausführung der CPR betont nach hinten geneigt, so wird der in eine Ausnehmung 118 im Inneren der Kopf-Nachbildung 102 ragende Schwenkteil 113a mitgenommen und dadurch um die Filmscharniere der Schlitzlinie 114 geschwenkt. Dadurch entsteht in dem halbkreisförmigen Abschnitt 115 der Schlitzlinie 114 die vorstehend beschriebene Öffnung 116, durch welche der Klemmzustand der Luftröhren-Nachbildung 121 aufgehoben wird; eine Beatmung durch Einblasen von Luft in die Luftröhren-Nachbildung 112 kann nun ausgeführt werden.

Die vorstehend beschriebene Brustplatte 112 der modifzierten Ausführungsform des erfindungsgemäßen Modells ist herstellungstechnisch und funktionsmäßig vorteilhafter als die Brustplatte 12 gemäß der erstbeschriebenen Ausführungsform. Denn infolge der im Ausgangszustand weitgehend gestreckten Lage des halsartigen Fortsatzes 113 bezüglich der Brustplatte 112 kann diese insgesamt aus einem flachen Kunststoffmaterial beispielsweise in einem Stanzverfahren hergetellt werden, wobei unmittelbar auch die Schlitzlinie 114 eingestanzt werden kann. Weiterhin ist der Klemmzustand der Luftröhren-Nachbildung 121 allein durch die Schwenklage des Schwenkteils 113a bestimmt, weil die Luftröhren-Nachbildung 121 im Halsbereich des Torsos 101 unterhalb des feststehenden Teils 113b verläuft und dadurch durch die Auflage des Halsbereichs auf dem feststehenden Teil nicht beeinflußt sein kann.

Die Ausführungsform gemäß den Fig. 12 bis 17 unterscheidet sich von derjenigen gemäß den Fig. 1 bis 12 auch dadurch, daß die Nachbildung des Gesichts unmittelbar an der Kopf-Nachbildung 102 vorgesehen ist. Zum Zweck der Beatmung wird daher das erweiterte Ende 122 der Luftröhren-Nachbildung 121 durch die Mundöffnung der Kopf-Nachbildung 102 hindurchgeführt und um diese herum ausgebreitet (vgl. Fig. 14 bis 17).

Die Erfindung ist nicht auf die vorstehend beschriebenen und dargestellten Ausführungsbeispiele beschränkt. So ist für das Erlernen der CPR die Ausstattung des Modells mit der Gesichtsmaske 11 nicht zwingend erforderlich. Vielmehr kann die Kopfnachbildung 2 entsprechend den Fig. 14 bis 17 unmittelbar mit einer Gesichtsnachbildung gestaltet sein, was aufgrund der einfachen Herstellungsart des Torsos und der Kopfnachbildung nicht zu einer ins Gewicht fallenden Verteuerung führt. In diesem Fall genügt die Erweiterung des Endes 122 der Luftröhren-Nachbildung 121 oder ein dem Steckverbindungselement 22 entsprechendes ringförmiges Verbindungselement, um das freie Ende der Luftröhrennachbildung 21 in der Mundöffnung 9 der Kopfnachbildung 2 zu fixieren. Weiterhin kann der mechanische Lautgeber 32 durch einen mechanischen Lautgeber' anderer Gestaltung ersetzt sein (z. B. gem. DE 42 O1 777 A1). Die Brustplatte 12 kann anstelle aus Kunststoff auch aus Metall bestehen und eine Dicke aufweisen, die den geforderten Ansprüchen an Biegeelastizität entspricht, falls diese gewünscht ist. Bei starrer Ausführung der Brustplatte kann daran gedacht sein, den Lautgeber 32 als gesonderten Einsatz vorzusehen, z. B. mit einer gesondert in die Brustplatte einsetzbaren Zunge zusammenwirken zu lassen, die unabhängig von einer Verformung der Brustplatte verformt wird.

Bei der modifizierten Ausführungsform des Modells ist die Schwenkbarkeit des Schwenkteils 113a auch nicht zwingend an die Verwendung der beschriebenen Filmscharniere gebunden. Diese können vielmehr durch Scharniere anderer Art ersetzt sein, zum Beispiel durch an die Rück- bzw. Unterseite des Schwenkteils 113a und des feststehenden Teils 113b angeklebte Bänder oder blattfederartig wirkende Streifen aus einem elastischem Flachmaterial.

Die Brustplatte kann bezüglich ihres Verformumgsverhaltens so ausgeführt sein, daß sie an der Gesamtverformung des Torsos bei einer Kompression teilnimmt, indem sie aufgrund ihrer entsprechenden Bemessung und Materialwahl biegeelastisch ist. Sie kann aber auch mit entsprechender Bemessung und Materialwahl gezielt starr im Vergleich zu dem gewählten Schaumstoff gehalten werden, sodaß in diesem Fall die Gesamtverformung praktisch ausschließlich eine Druckverformung des Torsorückens ist.

## Patentansprüche

1. Modell zum Üben der cardiopulmonaren Wiederbelebung (CPR) eines Menschen, mit einer Nachbildung des Brustkorbs (1) und des Kopfes (2) und mit einer Lungennachbildung (20) in Form eines Beutels, wobei der Brustkorb eine Struktur aus Schaumstoff und biegeelastischem Material aufweist,
**dadurch gekennzeichnet,**
**daß** die Brustkorbnachbildung ein Torso (1) aus einem elastisch druckverformbaren Schaumstoff mit einer hinter der Brustseite (8) aufgenommenen Brustplatte (12) ist und daß der Torsorücken Abstützkörper (6) bildet, wobei die Druckverformung des Schaumstoffs bei einer Kompression im Rahmen einer Herzmassage in Verbindung mit der Brustplatte (12) die natürliche Verformung eines menschlichen Brustkorbs nachbildet.

2. Modell nach Anspruch 1,
**dadurch gekennzeichnet,**
**daß** die Brustplatte (12) biegeelastisch ist und die Biegeverformung der Brustplatte sowie die Druckverformung der Abstützkörper (6) bei einer Kompression im Rahmen einer Herzmassage gemeinsam die natürliche Verformung eines menschlichen Brustkorbs nachbilden.

3. Modell nach Anspruch 1,
**dadurch gekennzeichnet,**
**daß** die Brustplatte (12) im wesentlichen starr ist.

4. Modell nach einem der Ansprüche 1 bis 3,
**dadurch gekennzeichnet,**
**daß** der Torso (1) auf seiner Rückseite eine Ausnehmung (3,3') aufweist, die in Querrichtung durch die Brustplatte (12) überbrückt ist.

5. Modell nach Anspruch 4,
**dadurch gekennzeichnet,**
**daß** die Ausnehmung (3) langgestreckt ist und in Längsrichtung des Torsos verläuft und daß die Abstützkörper (6) durch einander gegenüberliegende Randbereiche der Ausnehmung (3) gebildet sind.

6. Modell nach Anspruch 4 oder 5,
**dadurch gekennzeichnet,**
**daß** die Ausnehmung (3,3') sich unter ihre Randbereiche schlitzförmig hinein erstreckt und die Brustplatte (12) aufnimmt, wobei die Randbereiche (6) der Ausnehmung (3) die Rückseite der Brustplatte übergreifen.

7. Modell nach Anspruch 6,
**dadurch gekennzeichnet,**
**daß** die Brustplatte lösbar in der Ausnehmung (3,3') aufgenommen ist.

8. Modell nach Anspruch 7,
**dadurch gekennzeichnet,**
**daß** Randbereiche der Ausnehmung (3,3') zum Einfügen der Brustplatte (12) in den Torso (1) zumindest teilweise anhebbar sind.

9. Modell nach einem der Ansprüche 1 bis 8,
**dadurch gekennzeichnet,**
**daß** die Brustplatte (12) einen mechanischen Lautgeber (30) trägt, der bei jeder ausreichenden Kompression der Brustkorbnachbildung und bei korrekter Handposition ein Lautsignal gibt.

10. Modell nach einem der Ansprüche 1 bis 9,
**dadurch gekennzeichnet,**
**daß** die Kopfnachbildung (2) mit dem Torso (1) einstückig ausgebildet ist.

11. Modell nach einem der Ansprüche 5 bis 10,
**dadurch gekennzeichnet,**
**daß** die langgestreckte Ausnehmung (3) in dem Torsorücken sich in den Nackenbereich der Kopfnachbildung (2) fortsetzt und mit einer Mundöffnung (9) in der Kopfnachbildung korrespondiert.

12. Modell nach einem der Ansprüche 1 bis 11,
**dadurch gekennzeichnet,**
**daß** die Brustplatte (12) einen sich zu einer Mundöffnung (9) der Kopfnachbildung erstreckenden halsartigen Fortsatz (13) aufweist und daß die Luftröhren/Lungen-Nachbildung (20,21) zwischen der Brustseite (8) des Torsos und der Brustplatte (12) angeordnet ist.

13. Modell nach Anspruch 11 oder 12,
**dadurch gekennzeichnet,**
**daß** die Brustplatte (12) in Längsrichtung des Torsos gewölbt ist und der halsartige Fortsatz (13) hinter der Mundöffnung (9) zu dieser hin abgewinkelt ist und an seinem Ende zur Befestigung des Endes der Luftröhrennachbildung (21) ausgebildet ist.

14. Modell nach Anspruch 13,
**dadurch gekennzeichnet,**
**daß** das Ende des halsartigen Fortsatzes (13) innerhalb der Mundöffnung (9) als Teil (15) einer Steckverbindung gestaltet ist und daß durch die Mundöffnung (9) von vorne ein Steckverbindungselement (22) zur Fixierung der Luftröhrennachbildung (21) einsteckbar ist.

15. Modell nach Anspruch 14,
**dadurch gekennzeichnet,**
**daß** das Steckverbindungselement (22) Teil einer an der Kopfnachbildung (2) befestigbaren Gesichtsmaske (11) ist.

16. Modell nach Anspruch 15,
**dadurch gekennzeichnet,**
**daß** das Steckverbindungselement (22) zugleich zur Befestigung der Gesichtsmaske dient.

17. Modell nach einem der Ansprüche 12 bis 16,
**dadurch gekennzeichnet, daß** der Halsbereich (14) des Torsos und/oder der Kopfnachbildung im unbelasteten Zustand der Kopfnachbildung die längs dem Fortsatz (13) der Brustplatte (12) verlaufende Luftröhrennachbildung (21) gegen den Fortsatz drückt und deren Durchlaß blockiert.

18. Modell nach einem der Ansprüche 1 bis 17,
**dadurch gekennzeichnet,**
**daß** die Brustplatte (12) Befestigungselemente (18,19) zur Befestigung der Luftröhren/Lungen-Nachbildung (20,21) aufweist.

19. Modell zum Üben der cardiopulmonaren Wiederbelebung (CPR) eines Menschen, mit einer Nachbildung des Brustkorbs (1) und des Kopfes (2) und mit einer Lungennachbildung (20) in Form eines Beutels, wobei der Brustkorb eine Struktur aus Schaumstoff und biegeelastischem Material aufweist,
**dadurch gekennzeichnet,**
**daß** die Brustkorbnachbildung ein Torso (1) aus einem elastisch druckverformbaren Schaumstoff mit einer hinter der Brustseite (8) aufgenommenen Brustplatte (12,112) ist, wobei die Brustplatte einen sich zu der Kopfnachbildung (2) hin erstreckenden halsartigen Fortsatz (13, 113) aufweist, und daß zwischen der Brustseite des Torsos bzw. dem Halsbereich (14) der Kopfnachbildung und der Brustplatte eine Luftröhren/Lungen-Nachbildung (20,21; **120, 121**) derart angeordnet ist, daß in der Normalhaltung der Kopfnachbildung (2) die Luftröhrennachbildung (21, 121) durch den halsartigen Fortsatz (13, 113) der Brustplatte zumindest abschnittsweise eingeklemmt und dadurch blockiert ist, in zurückgeschwenkter Haltung der Kopfnachbildung jedoch durch Biegung oder Schwenkung des halsartigen Fortsatzes (13, 113) und/oder durch elastische Streckung der Brustseite bzw. des Halsbereichs (14) des Torsos freigegeben ist.

20. Modell nach Anspruch 12 oder 19,
**dadurch gekennzeichnet,**
**daß** der halsartige Fortsatz (113) einen an der Brustplatte (112) angelenkten Schwenkteil (113a) aufweist, der in einer nach hinten geschwenkten Stellung eine Öffnung (116) für den ungehinderten Verlauf der Luftröhren-Nachbildung (121) bildet, jedoch in der ungeschwenkten Stellung die Luftröhren-Nachbildung deren Durchlaß sperrend einklemmt.

21. Modell nach Anspruch 20,
**dadurch gekennzeichnet,**
**daß** die Brustplatte (112) einen Durchbruch (117) zur Hindurchführung der Luftröhren-Nachbildung auf die Rückseite der Brustplatte aufweist und daß die Luftröhren-Nachbildung die in der Schwenkstellung des Schwenkteils (113a) gebildete Öffnung (116) von hinten zur Mundöffnung hin durchsetzt.

22. Modell nach Anspruch 20 oder 21,
**dadurch gekennzeichnet,**
**daß** der Schwenkteil (113a) mit der Brustplatte (112) über ein Paar von eine Schwenkachse bildenden Scharnieren (114) verbunden ist und daß zwischen den einander gegenüberliegenden Rändern des Schwenkteils und der Brustplatte ein in einem Abstand von der genannten Schwenkachse angeordneter Schlitz (115) ausgebildet ist, in dem die Luftröhren-Nachbildung (121) in der ungeschwenkten Stellung des Schwenkteils (113a) eingeklemmt ist.

23. Modell nach Anspruch 22,
**dadurch gekennzeichnet,**
**daß** der Schlitz halbkreisförmig ist.

## Claims

1. Model for practising the cardiopulmonary resuscitation (CPR) of a human being, having a simulated thorax (1) and head (2) and having simulated lungs (20) in the form of a bag, the thorax having a structure made of foam and flexurally elastic material, **characterized in that** the simulated thorax is a torso (1) made of an elastically compressively deformable foam with a chest plate (12) accommodated behind the chest side (8), and **in that** the back of the torso forms supporting bodies (6), the compressive deformation of the foam during compression within the context of a heart massage, in conjunction with the chest plate (12), simulating the natural deformation of a human thorax.

2. Model according to Claim 1, **characterized in that** the chest plate (12) is flexurally elastic, and the bending deformation of the chest plate and the compressive deformation of the supporting bodies (6) during compression within the context of a heart massage together simulate the natural deformation of a human thorax.

3. Model according to Claim 1, **characterized in that** the chest plate (12) is essentially rigid.

4. Model according to one of Claims 1 to 3, **characterized in that**, on its rear side, the torso (1) has a cutout (3, 3'), which is spanned in the transverse direction by the chest plate (12).

5. Model according to Claim 4, **characterized in that** the cutout (3) is elongate and runs in a longitudinal direction of the torso, and **in that** the supporting bodies (6) are formed by mutually opposite border regions of the cutout (3).

6. Model according to Claim 4 or 5, **characterized in that** the cutout (3, 3') extends in a slot-like manner beneath its border regions and accommodates the chest plate (12), the border regions (6) of the cutout (3) engaging over the rear side of the chest plate.

7. Model according to Claim 6, **characterized in that** the chest plate is accommodated releasably in the cutout (3, 3').

8. Model according to Claim 7, **characterized in that**, in order to introduce the chest plate (12) into the torso (1), border regions of the cutout (3, 3') can be raised at least in part.

9. Model according to one of Claims 1 to 8, **characterized in that** the chest plate (12) bears a mechanical sound transmitter (30) which, in the case of the simulated thorax being compressed sufficiently and of the hands being positioned correctly, emits a sound signal.

10. Model according to one of Claims 1 to 9, **characterized in that** the simulated head (2) is formed integrally with the torso (1).

11. Model according to one of Claims 5 to 10, **characterized in that** the elongate cutout (3) in the back of the torso continues into the neck region of the simulated head (2) and corresponds with a mouth opening (9) in the simulated head.

12. Model according to one of Claims 1 to 11, **characterized in that** the chest plate (12) has a neck-like continuation (13) extending to a mouth opening (9) of the simulated head, and **in that** the simulated windpipe/lung formation (20, 21) is arranged between the chest side (8) of the torso and the chest plate (12).

13. Model according to Claim 11 or 12, **characterized in that** the chest plate (12) is curved in the longitudinal direction of the torso and the neck-like continuation (13) is angled in the direction of the mouth opening (9), behind the latter, and, at its end, is designed for fastening the end of the simulated windpipe (21).

14. Model according to Claim 13, **characterized in that** the end of the neck-like continuation (13), within the mouth opening (9), is configured as a part (15) of a plug-in connection, and **in that** a plug-in connection element (22) for fixing the simulated windpipe (21) can be plugged in through the mouth opening (9) from the front.

15. Model according to Claim 14, **characterized in that** the plug-in connection element (22) is part of a face mask (11) which can be fastened on the simulated head (2).

16. Model according to Claim 15, **characterized in that** the plug-in connection element (22) serves, at the same time, for fastening the face mask.

17. Model according to one of Claims 12 to 16, **characterized in that**, in the non-loaded state of the simulated head, the neck region (14) of the torso and/or of the simulated head presses the simulated windpipe (21), which runs along the continuation (13) of the chest plate (12), against the continuation and blocks the passage thereof.

18. Model according to one of Claims 1 to 17, **characterized in that** the chest plate (12) has fastening elements (18, 19) for fastening the simulated windpipe/lung formation (20, 21).

19. Model for practising the cardiopulmonary resuscitation (CPR) of a human being, having a simulated thorax (1) and head (2) and having simulated lungs (20) in the form of a bag, the thorax having a structure made of foam and flexurally elastic material, **characterized in that** the simulated thorax is a torso (1) made of an elastically compressively deformable foam with a chest plate (12, 112) accommodated behind the chest side (8), the chest plate having a neck-like continuation (13, 113) extending to the simulated head (2), and **in that** a simulated windpipe/lung formation (20, 21; 120, 121) is arranged between the chest side of the torso and/or the neck region (14) of the simulated head and the chest plate such that, in the normal position of the simulated head (2), the simulated windpipe (21, 121) is clamped in, at least in part, by the neck-like extension (13, 113) of the chest plate and is thus blocked but, in the pivoted-back position of the simulated head, is released as a result of bending or pivoting of the neck-like continuation (13, 113) and/or of elastic extension of the chest side and/or of the neck region (14) of the torso.

20. Model according to Claim 12 or 19, **characterized in that** the neck-like extension (113) has a pivoting part (113a) which is articulated on the chest plate (112) and, in a rearwardly pivoted position, forms an opening (116) for the unobstructed passage of the simulated windpipe (121) but, in the non-pivoted position, clamps in the simulated windpipe, blocking the passage of the latter in the process.

21. Model according to Claim 20, **characterized in that** the chest plate (112) has a through-opening (117) for guiding the simulated windpipe through onto the rear side of the chest plate, and **in that** the simulated windpipe passes through the opening (116), which is formed in the pivoting position of the pivoting part (113a), in the direction of the mouth opening from the rear.

22. Model according to Claim 20 or 21, **characterized in that** the pivoting part (113a) is connected to the chest plate (112) via a pair of hinges (114) which form a pivot axis, and **in that** formed between the mutually opposite borders of the pivoting part and the chest plate is a slot (115) which is spaced apart from the abovementioned pivot axis and in which the simulated windpipe (121) is clamped in in the non-pivoted position of the pivoting part (113a).

23. Model according to Claim 22, **characterized in that** the slot is semicircular.

## Revendications

1. Modèle destiné à pratiquer une réanimation cardio-pulmonaire (CPR) à un individu, du type comportant une reproduction de la cage thoracique (1) et de la tête (2), et une reproduction des poumons (20) sous forme d'un sac, la cage thoracique présentant une structure constituée en un matériau en mousse élastique à la flexion, **caractérisé en ce que** la reproduction de la cage thoracique consiste en un torse (1) réalisé en matériau en mousse élastique malléable sous l'effet d'une pression, comportant une plaque de poitrine (12) reprise derrière les côtés de la poitrine (8) et **en ce que** le dos du torse constitue un corps d'appui (6) et **en ce que** la déformation sous pression du matériau en mousse sous l'effet d'une compression dans le cadre d'un massage cardiaque en liaison avec la plaque de poitrine (12) reproduit la déformation naturelle d'une cage thoracique humaine.

2. Modèle selon la revendication 1, **caractérisé en ce que** la plaque de poitrine (12) est élastique en flexion et la déformation en flexion de la plaque de poitrine ainsi que la déformation sous l'effet de la pression du corps d'appui (6) lors d'une compression dans le cadre d'un massage cardiaque reproduisent ensemble la déformation naturelle d'une cage thoracique humaine.

3. Modèle selon la revendication 1, **caractérisé en ce que** la plaque de poitrine (12) est pratiquement rigide.

4. Modèle selon l'une des revendications 1 à 3, **caractérisé en ce que** le torse (1) présente sur sa face postérieure un évidement (3, 3') qui, en direction transversale, forme un pont à travers la plaque de poitrine.

5. Modèle selon la revendication 4, **caractérisé en ce que** l'évidement (3) est allongé et court en direction longitudinale du torse et **en ce que** le corps d'appui (6) est constitué par la zone marginale opposée à cet évidement (3).

6. Modèle selon la revendication 4 ou 5, **caractérisé en ce que** l'évidement (3, 3') s'étend vers l'intérieur en forme de fentes au-dessous de sa zone marginale et reçoit la plaque de poitrine (12), la zone marginale (6) de l'évidement (3) retenant les faces postérieures de la plaque de poitrine.

7. Modèle selon la revendication 6, **caractérisé en ce que** la plaque de poitrine est reçue mobile dans l'évidement (3, 3').

8. Modèle selon la revendication 7, **caractérisé en ce que** les zones marginales de l'évidement (3, 3') peuvent, au moins en partie, être soulevées pour l'introduction de la plaque de poitrine (12) dans le torse (1).

9. Modèle selon l'une des revendications 1 à 8, **caractérisé en ce que** la plaque de poitrine (12) porte un émetteur sonore mécanique qui, à chaque compression suffisante de la reproduction de la cage thoracique et pour chaque position correcte de la main, émet un signal sonore.

10. Modèle selon l'une des revendications 1 à 9, **caractérisé en ce que** la reproduction de tête (2) est réalisée en une seule pièce avec le torse (1).

11. Modèle selon l'une des revendications 5 à 10, **caractérisé en ce que** l'évidement longitudinal (3) dans le dos du torse se prolonge dans la zone de cou de la reproduction de la tête (2) et correspond à une ouverture de bouche (9) dans la reproduction de tête.

12. Modèie selon l'une des revendications 1 à 11, **caractérisé en ce que** la plaque de poitrine (12) présente un appendice prolongateur (13) en forme de cou s'étendant dans la reproduction de tête et **en ce que** la reproduction oesophage / poumons (20, 21) est située entre le côté poitrine (8) du torse et la plaque de poitrine (12).

13. Modèle selon la revendication 11 ou 12, **caractérisé en ce que** la plaque de poitrine (12) est galbée dans la direction longitudinale du torse et **en ce que** l'appendice prolongateur (13) en forme de cou est replié vers l'intérieur de l'ouverture de bouche (9), et **en ce que**, à son extrémité, il a une forme telle qu'il permet la fixation de l'extrémité de la reproduction d'oesophage (21).

14. Modèle selon la revendication 13, **caractérisé en ce que** l'extrémité de l'appendice prolongateur en forme de cou (13) est agencée à l'intérieur de l'ouverture de bouche (9) en tant que portion (15) d'une liaison par enfoncement, et **en ce que** l'ouverture de bouche (9) peut être insérée depuis l'avant sous forme d'un élément de liaison enfonçable (22) en vue de la fixation de la reproduction de l'oesophage (21).

15. Modèle selon la revendication 14, **caractérisé en ce que** l'élément de liaison enfonçable (22) constitue une portion d'un masque de visage (11) pouvant être fixé à la reproduction de tête (2).

16. Modèle selon la revendication 15, **caractérisé en ce que** l'élément de liaison enfonçable (22) sert en même temps à la fixation du masque de visage.

17. Modèle selon l'une des revendications 12 à 16, **caractérisé en ce que** la zone de cou (14) du torse et/ou la reproduction de tête à l'état non chargé de la reproduction de tête compriment la reproduction d'oesophage (21) s'étendant le long de l'appendice prolongateur (13) de la plaque de poitrine (12) contre l'appendice prolongateur et bloquent ainsi le passage de celui-ci.

18. Modèle selon l'une des revendications 1 à 17, **caractérisé en ce que** la plaque de poitrine (12) présente des éléments de fixation (18, 19) destinés à la fixation de la reproduction de l'oesophage / poumons (20, 21).

19. Modèle destiné à pratiquer une réanimation cardio-pulmonaire (CPS) à un individu comportant une reproduction de la cage thoracique (1) et de la tête (2) et une reproduction des poumons (20) sous forme d'un sac, la cage thoracique présentant une structure réalisée en un matériau en mousse élastique à la flexion, **caractérisé en ce que** la reproduction de la cage thoracique consiste en un torse (1) réalisé en un matériau en mousse élastique et malléable sous l'effet d'une pression, la plaque de poitrine présentant un appendice prolongateur (13, 113) semblable à un cou s'étendant dans la reproduction de tête, et **en ce que**, entre le côté poitrine du torse et la zone de cou (14) de la reproduction de tête et la plaque de poitrine, est disposée une reproduction d'oesophage / poumons (20, 21, 120, 121), d'une manière telle que, dans la position normale de la reproduction de tête (2), la reproduction d'oesophage (21, 121) est collée et ainsi bloquée, au moins sur une fraction de section, à l'intérieur de l'appendice prolongateur en forme de cou (13, 113) de la plaque de poitrine, en position de basculement de retour de la reproduction de tête, mais est cependant libérée par flexion ou basculement de l'appendice prolongateur en forme de cou (13, 113) et/ou par étirement élastique du côté poitrine ou de la zone de cou (14) du torse.

20. Modèle selon la revendication 12 ou 19, **caractérisé en ce que** l'appendice prolongateur en forme de cou (113) présente une portion basculable articulée à la plaque de poitrine (112) qui, dans une position basculée vers l'arrière, constitue une ouverture (116) pour le passage sans obstacle de la reproduction d'oesophage (121) mais, cependant, est collée dans la position non basculée de la reproduction d'oesophage en empêchant le passage de celle-ci.

21. Modèle selon la revendication 20, **caractérisé en ce que** la plaque de poitrine (112) présente une traversée (117) en vue de l'introduction de la reproduction d'oesophage sur le côté postérieur de la plaque de poitrine et **en ce que** la reproduction d'oesophage traverse, depuis l'arrière vers l'ouverture de bouche, l'ouverture (116) formée dans la position de basculement de la portion basculante (113a).

22. Modèle selon la revendication 20 ou 21, **caractérisé en ce que** la portion basculante (113a) est réunie avec la plaque de poitrine (112) par une paire de charnières (114) formant un axe de basculement et **en ce que**, entre les bords opposés l'un à l'autre de la portion basculante et la plaque de poitrine est créée une fente (115) située à une certaine distance dudit axe de basculement, dans l'intérieur de laquelle est collée la reproduction de l'oesophage (121) dans la position non basculée de la portion basculante (113a).

23. Modèle selon la revendication 22, **caractérisé en ce que** la fente est en forme de demi-cercle.
